(19) Europäisches Patentamt
European Patent Office
Office européen des brevets

(11) **EP 3 532 980 B1**

(12) **EUROPEAN PATENT SPECIFICATION**

(45) Date of publication and mention
of the grant of the patent:
**09.06.2021 Bulletin 2021/23**

(21) Application number: **17866156.7**

(22) Date of filing: **11.09.2017**

(51) Int Cl.:
*G06F 21/83* *(2013.01)*    *H04L 9/00* *(2006.01)*
*G06F 21/52* *(2013.01)*    *G06F 21/56* *(2013.01)*
*G06F 21/60* *(2013.01)*    *H04L 9/12* *(2006.01)*
*H04L 9/08* *(2006.01)*    *G06F 21/55* *(2013.01)*

(86) International application number:
**PCT/FI2017/050647**

(87) International publication number:
**WO 2018/078212 (03.05.2018 Gazette 2018/18)**

(54) **METHOD IN COMPUTER ASSISTED OPERATION**

VERFAHREN IN EINEM RECHNERGESTÜTZTEN BETRIEB

PROCÉDÉ DANS UNE MISE EN MARCHE ASSISTÉE PAR ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2016 FI 20165817**

(43) Date of publication of application:
**04.09.2019 Bulletin 2019/36**

(73) Proprietor: **Jetico Inc. Oy
02150 Espoo (FI)**

(72) Inventor: **FROLOV, Sergey
630128 Novosibirsk (RU)**

(74) Representative: **Kangasmäki, Reijo Holger
Finnish Patent Consulting FPC
Patenttikonsultointi Kangasmäki Oy
PL 25
33401 Tampere (FI)**

(56) References cited:
**US-A1- 2005 177 649    US-A1- 2007 182 714
US-A1- 2007 182 714    US-A1- 2008 313 370
US-A1- 2009 070 595    US-A1- 2009 254 994
US-A1- 2009 271 866    US-A1- 2010 023 750
US-A1- 2010 185 876    US-A1- 2012 079 282
US-A1- 2014 281 549**

**Description**

The invention relates to a method in computer assisted operation according to the preamble of the independent claim directed thereto. The invention concerns especially means for avoiding keystroke interference on so called anti-keylogger software principle. The closest prior art is a keyboard-input information-security apparatus and method as published in US2010185876.

Below are first of all explanations for some essential terms related to computer assisted operation:

Operating System - a set of software components that manages computer hardware and software resources and provides common services for computer programs.

Key - in the context of the present application key is a character entered by a user using the computer by pressing a key on the computer's keyboard.

Key-Logger - a resident computer program that intercepts keys typed by the users. The programs can be used by a legal user, for example, to debug programs or to automate some processes required entering phrases (like passwords) or functional keys. On the other hand, Key-Logging programs are widely used by trojans or viruses to intercept passwords or other sensitive data like credit card information.

Anti-Keylogger - in this context a computer program that prevents intercepting passwords or other sensitive data entered by the computer user.

Operating system driver - a low-level software module running in the operating system and that is responsible for reacting on hardware event caused by computer hardware. This low-level or hardware driver is also responsible for translating high level requests from the operating system to the computer hardware. There are also intermediate drivers that may enhance processing of hardware events or modifying (optimizing) requests sent by the operating system, or monitoring hardware activity in the system.

Standard operating system function - a function from an operating system Application Program Interface (API) set, which means a set of documented functions to a third-party software by the operating system vendor.

Virtual Key and Scancode - Windows operating system documentation explains these terms as follows:

*"The system provides device-independent keyboard support for applications by installing a keyboard device driver appropriate for the current keyboard. The system provides language-independent keyboard support by using the language-specific keyboard layout currently selected by the user or the application. The keyboard device driver receives scan codes from the keyboard, which are sent to the keyboard layout where they are translated into messages and posted to the appropriate windows in your application.*

*Assigned to each key on a keyboard is a unique value called a scan code, a device-dependent identifier for the key on the keyboard.*

*Secondly, the keyboard device driver interprets a scan code and translates (maps) it to a virtual-key code, a device-independent value defined by the system that identifies the purpose of a key. "*

The operating principle between a keyboard and a user operated program is such that, when the user presses some key on the keyboard, the computer hardware generates an event (sometimes called hardware interrupt). Then a low-level or hardware keyboard driver is activated, whereafter the driver is responsible for transferring the event to upper-level drivers and further to the operating system and to the user program that accepts the entered character. On its way through the chain of one or more intermediate drivers and through the modules of the operating system the entered characters can be intercepted by key-logging programs.

Keystroke logging, often referred to as keylogging or keyboard capturing, is an action of recording or logging the keys being struck on a keyboard, typically covertly, so that the person using the keyboard is unaware that his/her actions are being monitored. Keylogging can also be used to study human-computer interaction. Numerous keylogging methods exist: they range from hardware and software-based approaches to acoustic analysis.

Especially software-based keyloggers are computer programs designed to work on a target computer's software. Keyloggers are used e.g. in IT-organizations to troubleshoot technical problems with computers and business networks. In family and business use keyloggers are used legally in monitoring of network usage without their users' direct knowledge. However, malicious individuals can use keyloggers on public or private computers e.g. to steal passwords or credit card information etc.

Most of these keyloggers aren't stopped e.g. by HTTPS encryption because that only protects data when being transmitted between computers. Malicious keylogging at present is a potential threat in use of every computer, being connected to a keyboard.

In order to prevent malicious keylogging there exist at present keystroke interference software products on the market. This type of software attempts to trick keyloggers e.g. by introducing random keystrokes, which in practice may result more information in the keylogger recording than it needs to. An attacker has the task of extracting the keystrokes of interest. With present anti-keylogger software technique, the security of this mechanism, especially how well it stands up to cryptanalysis, is found in practice not to be at a satisfactory level.

Furthermore, e.g. US 2010/185876 discloses a method in computer assisted operation, wherein a user operates by using a keyboard of a computer. In this method, when the user presses a key of the keyboard, a computer hardware generates an event i.e. so called hardware interrupt, whereafter a low-level driver of the keyboard is activated, which transfers the event to one or more upper-level drivers, thereafter to an operating system of the computer and furthermore finally to a program operated by the user in order to carry out the user's purpose of operation. In this context an anti-keylogger software based on encrypting is being used for preventing malicious keylogging, wherein, in order to prevent interception of the event received from the keyboard on its way to the user operated program, communication related to the event between the low-level keyboard driver to the user operated program receiving the entered key is being encrypted by the anti-keylogger software. The software includes an encrypting module and a decrypting module, wherein calls of standard operating system functions resulted by keyboard inputs by the user are being replaced by functions provided by the anti-keylogger software's encryption module.

Due to the level of prior art in the field regarding the anti-keylogger software technique available at present, there is always a risk for malicious keylogging in computer assisted operation, which may cause e.g. significant economical damages.

It is the aim of the present invention to achieve a decisive improvement in the problems described above and thus to raise essentially the level of prior art regarding problems due to malicious keylogging. In order to achieve this aim, the present invention is characterized by what has been defined in the characterizing part of the independent claim directed thereto.

As the most important advantages of the method in computer assisted operation according to the invention may be mentioned simplicity and efficiency of the operating principle of the method and the software applicable for the same, thanks to which a reliable protection against malicious keylogging can be achieved with simple enough measures by any user without a need for special expertise in IT-technology. When applying the method, the user only needs to install the software to his/her computer, whereafter the method is being carried out on its own by the anti-keylogger software, wherein an installation procedure thereof is being used firstly for analyzing the chain of drivers registered for the keyboard and secondly for installing an extra keyboard driver at a proper place just above the keyboard low-level driver.

Furthermore as an advantageous embodiment, the extra keyboard driver is being loaded at the earliest time when the operating system of the computer loads, whereby as soon as the hardware keyboard driver gets loaded, the anti-keylogger software's encryption module remembers addresses of entry points of the driver, wherein, in case if some other driver will try to intercept communication with the keyboard low-level driver, the addresses are being changed and it will be detected by the encryption module. Furthermore, changes made in the configuration of the chain of drivers registered for the keyboard hardware are being monitored by the encryption module, whereby when some new driver/module will be added, the encryption module checks that its extra keyboard driver will remain as the first one above the keyboard low-level or hardware driver.

Practical advantages achieved by the present invention are thanks to the following:

a) information about keyboard hardware event comes through a regular path of the communication/notification chain of the operating system. All intermediate modules including filtering drivers and the operating system components work in a regular way. On one hand, the method procedure of the invention does not harm normal way of the system work. On the other hand, for viruses and trojans, the procedure creates a picture that everything works as usual, except that not correct characters are intercepted;

b) encryption of the entered characters happens so that even if the user enters the same characters, the intercepted sequence will contain different characters. For example, string like "qqqqqqqq" will look like "anbc!3pRb", or "abcabcabc" will look like "bv5TgWp-u".

Other advantageous embodiments of the method in computer assisted operation according to the invention have been presented in the dependent claims directed thereto.

In the following description, the invention is depicted in detail with reference to the appended diagram showing the general operating principle of the method in computer assisted operation according to the invention.

The invention relates to a method in computer assisted operation, wherein a user operates by using a keyboard that is connected in an at least data transmitting manner with a computer, such as a PC, laptop, mobile device or the like. When the user presses a key of the keyboard 01, a computer hardware generates an event (so called hardware interrupt), whereafter a low-level driver 02 of the keyboard is activated, which transfers the event to one or more upper-level drivers 03, thereafter to an operating system 04 of the computer and furthermore finally to a program 05 operated by the user in order to carry out the user's purpose P of operation, wherein an anti-keylogger software 06 based on encrypting is being used for preventing malicious keylogging. In order to prevent interception of the event received from the keyboard on its way to the user operated program, with reference to the general operating principle of the method according to the invention shown in the appended diagram, the whole way of communication related to the event between the low-level keyboard driver 02 to the user operated program 05 receiving the entered key is being encrypted by an anti-keylogger software 06, which includes at least an encryption module 06a and a decryption module 06b, wherein the encryption module comprises an extra keyboard driver 06a1 that is being installed by the software 06 as the first (closest) driver to the keyboard low-level driver 02 and the decryption module 06b comprises a software library SL that is being embedded by the software into the user operated program.

Furthermore, when the extra keyboard driver is being installed, an installation procedure of the anti-keylogger software is being used firstly for analyzing the chain of drivers registered for the keyboard and secondly for installing the extra keyboard driver 06a1 at a proper place just above the keyboard low-level driver 02.

In the method, the extra keyboard driver 06a1 is being loaded preferably at the earliest time when the operating system 04 of the computer loads, whereby, as soon as the hardware keyboard driver gets loaded, the encryption module 06a remembers addresses of entry points of the driver, wherein, in case some other driver will try to intercept communication with the keyboard low-level driver 02, the addresses are being changed and it will be detected by the encryption module.

Furthermore as an advantageous embodiment of the method according to the invention, changes made in the configuration of the chain of drivers registered for the keyboard hardware are being monitored by the encryption module 06a, whereby when some new driver/ module will be added, the encryption module checks that its extra keyboard driver 06a1 will remain as the first one above the keyboard low-level driver 02.

In the method, keyboard inputs by the user are being transmitted to the decryption module's software library SL that is compiled into the a anti-keylogger software 06, by means of which calls of standard operating system functions are being replaced by functions provided by the anti-keylogger software's encryption module 06a.

In the method, replacement of the standard keyboard functions is being carried out when the anti-keylogger software 06 has notified that it is about to receive a keyboard input (in Windows it receives "Set Keyboard Focus" event), wherein the following steps b1 are being performed:

- a random pair of tables: an Original Scancode Table and a Messed Scancode Table, are being generated, the tables having a size that corresponds to the number of keys that can be pressed on the keyboard, wherein all the Scancodes in the tables are being generated so that they have real Scancodes available for the keyboard hardware;

- a random Shift Table is being generated;

- a buffer for the pair of an Original Virtual Key Table and a Messed Virtual Key Table having the same size as the Scancode Tables is being allocated, wherein a way to set a correspondence between every Scancode and Virtual Key according to the language settings currently active is being provided by the operating system of the computer, whereby for every element in the Original Scancode Table is being defined an element in the Original Virtual Key Table and for every element in the Messed Scancode Table an element is being defined in the Original Virtual Key Table;

- the original Scancode Table; the messed Scancode Table, the original Virtual Key Table, the messed Virtual Key Table and the random Shift Table are being transmitted by the decryption module 06a to the encryption module 06b, wherein the procedure in transmitting of the information is being performed, preferably by using shared memory that is being erased immediately after the procedure is done; and

- essentially at the moment when the Tables have been transmitted, a Counter of pressed keys is being initialized by both the encryption and decryption modules 06a, 06b.

At this step b2, when the user presses a key on the keyboard 01:
the encryption module 06a gets the Scancode and looks it up in the Original Scancode Table and when finding the Scancode in a position N, it calculates a position M in the Messed Scancode Table as follows:

$$M = (N + Shift\_Table[Counter \% Shift\_Table\_Size]) \% Scode\_Table\_size$$

where:

Scode_Table_size = size of Scancode Table (or number of elements in the Table)
Shift_Table_Size = size of Shift Table
Counter = counter of keys already entered
"%" = module operation (the operation finds the remainder after division of one number by another), and
the decryption module 06b gets a messed Virtual Key and looks it up in the Messed Virtual Key Table and when finding the messed Virtual Key in position M, it calculates position N in the Original Virtual Key Table as follows:

$$N = (M + (Scode\_Table\_size - (Shift\_Table[ Counter \% Shift\_Table\_Size ] \% Scode\_Table\_size))) \% Scode\_Table\_size,$$

wherein at this step b4, after calculating the position N in the Original Virtual Key Table, the anti-keylogger software 06 determines the Original Virtual Key and furthermore determines the number/character of the keyboard 01 key that is originally entered in the present computer operation by the user.

As a furthermore advantageous embodiment of the method, a value in the Counter of entered keys is being incremented both in the encryption and decryption modules 06a, 06b, wherein when the value of the Counter changes, the user will get different specific values N and M due to each and even the same key strokes typed by the user being encrypted by the anti-keylogger software 06 into different Scancodes.

The anti-Keylogger Algorithm of the present method is as follows:
First task is to install the encryption module 06a1 exactly above low-level or hardware keyboard driver 02 and do not allow any other driver to install itself between the low-level driver and the extra keyboard driver of the encryption module 06a. The task is solved in the following way:

A) when the extra keyboard driver 06a1 of the encryption module 06a is installed, the installation program analyzes the chain of drivers registered for the keyboard device 01 and installs the extra driver 06a1 at a proper place just above the keyboard low-level driver 02;

B) the module 06a loads at the earliest time when the operating system loads. Then, as soon as the low-level keyboard driver 02 loads, it remembers addresses of entry points of the driver. As the result, if some other driver will try to intercept communication with the low-level keyboard driver, the addresses will be changed and it will be detected by the encryption module 06a;

C) the module 06a also monitors any changes made in the configuration of the chain of drivers registered for the keyboard 01 hardware. If some new module is added, the module checks that it continues to be the first one above the keyboard hardware driver 02. If not, the module restores its position in the chain.

Second task is creating the decryption module 06b and as explained above, the decryption module is a software library that is compiled into the program that has to have protected keyboard input. Such a program must have the calls of standard operating system functions that receive keyboard input replaced by the functions provided by the keyboard decryption module. In this context the keyboard decryption module does the following:

A). When the anti-keylogger software 06 is notified that it is about to receive keyboard 01 input (in Windows it receives "Set Keyboard Focus" event) it makes a number of steps:

i) creates a randomly generated pair of tables: The Original Scancode Table and the Messed Scancode Table. The tables have the same size that corresponds to number of keys that can be pressed on the keyboard 01. All the Scancodes in the tables are generated so that they have real Scancodes available for the keyboard hardware;

ii) creates the randomly generated Shift Table;

iii) allocates the buffer for the pair of tables: the Original Virtual Key Table and the Messed Virtual Key Table. The tables are of the same size as the Scancode Tables. The operating system 04 provides a way to set a correspondence between every Scancode and Virtual Key according to the language settings currently active. So, for every element in the Original Scancode Table there is an element in the Original Virtual Key Table defined. For every element in the Messed Scancode Table there is an element in the Original Virtual Key Table defined;

(In the beginning of the specification is explained what the Virtual Key and Scancode terms mean. The main difference in practice is that Scancode is a hardware dependent value that may vary from one keyboard hardware to another and the Virtual Key is a hardware independent value. The keyboard low-level or hardware driver 02 as well as the Anti-Keylogger encryption module 06a receive Scancodes. The decryption module 06b receives characters and both the Scancode and the Virtual Key.)

iv) the decryption module 06b sends all the Tables to the encryption module 06a. The sending procedure should be as safe as possible to avoid intercepting of the Tables. The procedure should use shared memory to send the information and erase the memory as soon as possible; and

v) at the moment when the Tables are sent, both encryption and decryption modules 06a, 06b initialize a Counter of pressed keys.

B). When the user presses a key on the keyboard 01, the following happens:

i) the encryption module 06a gets the Scancode and looks it up in the Original Scancode Table. When the Scancode is found in position N, it calculates position M in the Messed Scancode Table as following:

```
M = (N + Shift_Table[Counter % Shift_Table_Size]) %
Scode_Table_size
```

where:

Scode_Table_size = size of Scancode Table (or number of elements in the Table)
Shift_Table_Size = size of Shift Table
Counter = counter of keys already entered
"%" = module operation (the operation finds the remainder after division of one number by another)

ii) the decryption module 06b gets the messed Virtual Key and looks it up in the Messed Virtual Key Table. When the Virtual Key is found in position M, it calculates position N in the Original Virtual Key Table as follows:

```
N = (M + (Scode_Table_size - (Shift_Table[ Counter %
Shift_Table_Size  ]   %   Scode_Table_size)))   %
Scode_Table_size
```

After calculating the position N in the Original Virtual Key Table, the anti-keylogger software 06 determines the Original Virtual Key and is also able to determine the character that is entered according to the language locale active on the computer at the moment.

iii) value of the "Counter of entered keys" is incremented both in encryption and decryption modules 06a, 06b. Since the value of the Counter changes, next time, even if the user presses the same key on the keyboard, he/she will get a different value with the "Shift_Table[Counter % Shift_Table_Size]" formulas above. Hence, despite the same keys are being typed, they will be encrypted into different Scancodes. In the present method implementation of Anti Key-Logger may also include handling of special keys like "Shift", "Control", "Alt", "Num-Lock" keys etc. It is clear that the method according to the invention is not limited to the procedures explained above and shown on general level in the appended diagram, but the invention is defined and the scope of protection is limited by the appended claims.

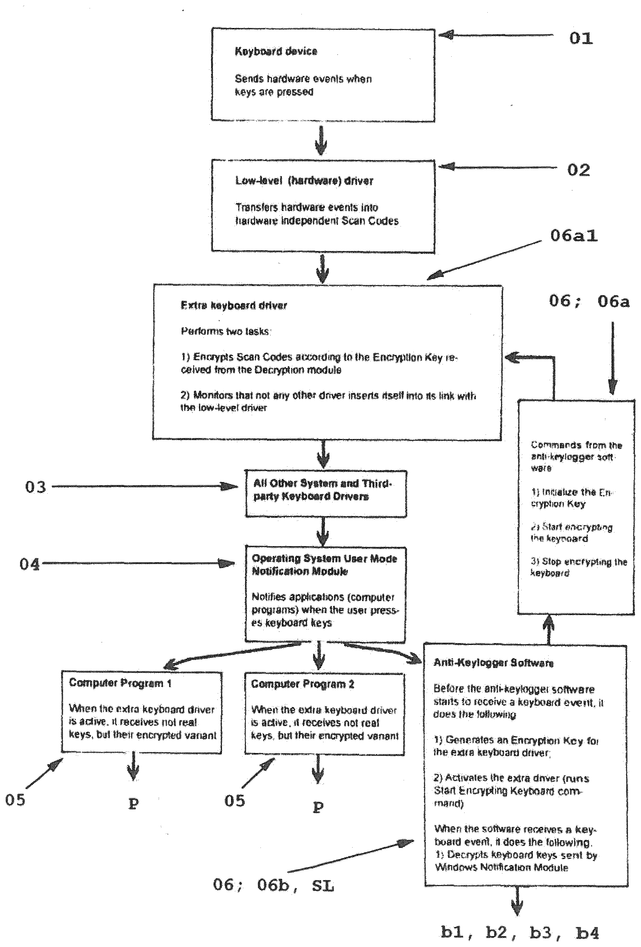

**Claims**

1. Method in computer assisted operation, wherein a user operates by using a keyboard that is connected in an at least data transmitting manner with a computer, such as a PC, laptop, mobile device or the like, wherein, when the user presses a key of the keyboard (01), a computer hardware generates an event i.e. so called hardware interrupt, whereafter a low-level driver (02) of the keyboard is activated, which transfers the event to one or more upper-level drivers (03), thereafter to an operating system (04) of the computer and furthermore finally to a program (05) operated by the user in order to carry out the user's purpose of operation (P), and, wherein an anti-keylogger software (06) based on encrypting is being used for preventing malicious keylogging, wherein, in order to prevent interception of the event received from the keyboard on its way to the user operated program, communication related to the event between the low-level keyboard driver to the user operated program receiving the entered key is being encrypted by the anti-keylogger software, which includes at least an encryption module (06a) and a decryption module (06b), wherein the anti-keylogger software (06) installs an extra keyboard driver (06a1) of the encryption module (06a) as the first (closest) driver to the keyboard low-level driver (02), wherein keyboard inputs by the user are being transmitted to the decryption module's software library (SL), wherein the decryption module is a software library that is compiled into the program that has to have protected keyboard input, thereby replacing the calls of standard operating system functions that receive keyboard input with the functions provided by the keyboard decryption module, wherein when the anti-keylogger software has notified that it is about to receive a keyboard input, the following steps (b1) are being performed:

- a random pair of tables: an Original Scancode Table and a Messed Scancode Table, are being generated, the tables having a size that corresponds to the number of keys that can be pressed on the keyboard, wherein all the Scancodes in the tables are being generated so that they have real Scancodes available for the keyboard hardware;
- a random Shift Table is being generated;
- a buffer for the pair of an Original Virtual Key Table and a Messed Virtual Key Table having the same size as the Scancode Tables is being allocated, wherein a way to set a correspondence between every Scancode and Virtual Key according to the language settings currently active is being provided by the operating system of the computer, whereby for every element in the Original Scancode Table is being defined an element in the Original Virtual Key Table and for every element in the Messed Scancode Table an element is being defined in the Original Virtual Key Table;
- all the Tables are being transmitted by the decryption module (06b) to the encryption module (06a), wherein the procedure in transmitting of the information is being performed preferably by using shared memory that is being erased immediately after the procedure is done; and
- essentially at the moment when the Tables have been transmitted, a Counter of pressed keys is being initialized by both the encryption and decryption modules (06a, 06b), wherein (b2) when the user presses a key on the keyboard:

the encryption module (06a) gets the Scancode and looks it up in the Original Scancode Table and when finding the Scancode in a position N, it calculates a position M in the Messed Scancode Table as follows:

```
M = (N + Shift_Table[Counter % Shift_Table_Size]) %
Scode_Table_size
```

where:

Scode_Table_size = size of Scancode Table (or number of elements in the Table)
Shift_Table_Size = size of Shift Table
Counter = counter of keys already entered
"%" = module operation (the operation finds the remainder after division of one number by another), and the decryption module (06b) gets a messed Virtual Key and looks it up in the Messed Virtual Key Table and when finding the messed Virtual Key in position M, it calculates position N in the Original Virtual Key Table as follows:

```
N = (M + (Scode_Table_size - (Shift_Table[ Counter %
Shift_Table_Size    ]    %    Scode_Table_size)))    %
Scode_Table_size,
```

wherein (b4) after calculating the position N in the Original Virtual Key Table, the anti-keylogger software (06) determines the Original Virtual Key and furthermore determines the keyboard input that is originally entered in the present computer operation by the user.

2. Method according to claim 1, **characterized in that**, a value in the Counter of entered keys is being incremented both in the encryption and decryption modules (06a, 06b), wherein when the value of the Counter changes, the user will get different specific values N and M due to each and even the same key strokes typed by the user being encrypted by the anti-keylogger software (06) into different Scancodes.

3. Method according to claim 1 or 2, **characterized in that**, when the extra keyboard driver (06a1) is being installed, an installation procedure of the anti-keylogger software (06) is being used firstly for analyzing the chain of drivers registered for the keyboard and secondly for installing the extra keyboard driver at a proper place just above the keyboard low-level driver (02).

4. Method according to claim 3, **characterized in that**, the extra keyboard driver (06a1) is being loaded at the earliest time when the operating system of the computer loads, whereby, as soon as the hardware keyboard driver gets loaded, the encryption module (06a) remembers addresses of entry points of the driver, wherein, in case some other driver will try to intercept communication with the keyboard low-level driver (02), the addresses are being changed and it will be detected by the encryption module.

5. Method according to claim 3 or 4, **characterized in that**, changes made in the configuration of the chain of drivers registered for the keyboard hardware are being monitored by the encryption module (06a), whereby when some new driver or encrypting/decrypting module will be added, the encryption module checks that its extra keyboard driver (06a1) will remain as the first one above the keyboard low-level driver (02).

6. Method according to any of the preceding claims 1- 5, **characterized in that**, keyboard inputs by the user are being transmitted to the decryption module's software library (SL) that is compiled into the anti-keylogger software (06).

**Patentansprüche**

1. Verfahren in einem rechnergestützten Betrieb, bei dem ein Benutzer eine Tastatur verwendet, die zumindest zur Datenübermittlung mit einem Rechner, wie z.B. einem PC, einem Laptop, einem mobilen Gerät oder dergleichen, verbunden ist, wobei, wenn der Benutzer eine Taste der Tastatur (01) drückt, eine Computerhardware ein Ereignis, d.h. einen so genannten Hardware-Interrupt, erzeugt, woraufhin ein Low-Level-Tastaturtreiber (02) aktiviert wird, der das Ereignis an einen oder mehrere Upper-Level-Treiber (03), danach an ein Betriebssystem (04) des Rechners und daraufhin schließlich an ein Programm (05), das vom Benutzer verwendet wird, um den vom Benutzer gewünschten Betriebszweck (P) zu erfüllen, weiterleitet, und wobei eine auf Verschlüsselung basierende Anti-Keylogger-Software (06) verwendet wird, um eine böswillige Protokollierung der Tastatureingaben zu verhindern, wobei, um ein Abfangen des von der Tastatur empfangenen Ereignisses auf seinem Weg zu dem benutzerbedienten Programm zu verhindern, die auf das Ereignis bezogene Kommunikation zwischen dem Low-Level-Tastaturtreiber und dem benutzerbedienten Programm, das die Tasteneingabe empfängt, durch die Anti-Keylogger-Software verschlüsselt wird, die mindestens ein Verschlüsselungsmodul (06a) und ein Entschlüsselungsmodul (06b) umfasst, wobei die Anti-Keylogger-Software (06) einen zusätzlichen Tastaturtreiber (06a1) des Verschlüsselungsmoduls (06a) als ersten (nächstgelegenen) Treiber zu dem Low-Level-Tastaturreiber (02) installiert, wobei Tastatureingaben des Benutzers an die Softwarebibliothek (SL) des Entschlüsselungsmoduls übertragen werden, wobei das Entschlüsselungsmodul eine Softwarebibliothek ist, die in das Programm kompiliert wird, das geschützte Tastatureingaben haben muss, wobei die Aufrufe von Standard-Betriebssystemfunktionen, die Tastatureingaben empfangen, durch die von dem Tastatur-Entschlüsselungsmodul bereitgestellten Funktionen ersetzt werden, wobei, wenn die Anti-Keylogger-Software gemeldet hat, im Begriff zu sein, eine Tastatureingabe zu empfangen, die folgenden Schritte (b1) durchgeführt werden:

- es wird ein zufälliges Tabellenpaar (eine originäre Scancode-Tabelle und eine manipulierte Scancode-Tabelle) erzeugt, wobei die Tabellen eine Größe haben, die der Zahl der Tasten entspricht, die auf der Tastatur gedrückt werden können, wobei alle Scancodes in den Tabellen so erzeugt werden, dass sie echte Scancodes für die Tastatur-Hardware zur Verfügung haben;

- es wird eine zufällige Umwandlungstabelle [Shift Table] erzeugt;

- es wird ein Puffer für das Paar aus einer originären Virtuellen-Tasten-Tabelle und einer manipulierten Virtuellen-Tasten-Tabelle mit der gleichen Größe wie die Scancode-Tabellen zugewiesen, wobei eine Möglichkeit zum Einstellen einer Entsprechung zwischen jedem Scancode und jeder virtuellen Taste gemäß den derzeit aktiven Spracheinstellungen durch das Betriebssystem des Rechners bereitgestellt wird, wobei für jedes Element in der originären Scancode-Tabelle ein Element in der originären Virtuellen-Tasten-Tabelle und für jedes Element in der manipulierten Scancode-Tabelle ein Element in der originären Virtuellen -Tasten-Tabelle definiert wird;

- alle Tabellen werden von dem Entschlüsselungsmodul (06b) an das Verschlüsselungsmodul (06a) übertragen, wobei der Vorgang der Übertragung der Informationen vorzugsweise unter Verwendung eines gemeinsam genutzten Speichers durchgeführt wird, der unmittelbar nach Beendigung des Vorgangs gelöscht wird; und

- im Wesentlichen in dem Moment, in dem die Tabellen übertragen wurden, sowohl vom Verschlüsselungs- als auch vom Entschlüsselungsmodul (06a, 06b) ein Tasteneingabezähler initialisiert wird, wobei (b2), wenn der Benutzer eine Taste auf der Tastatur drückt:

das Verschlüsselungsmodul (06a) den Scancode erhält und ihn in der originären Scancode-Tabelle nachschlägt und beim Auffinden des Scancodes an einer Position N wie folgt eine Position M in der manipulierten Scancode-Tabelle berechnet:

```
M = (N + Shift_Table[Counter % Shift_Table_Size]) %
Scode_Table_size
```

wobei:

Scode_Table_size = Größe der Scancode-Tabelle (oder Anzahl der Elemente in der Tabelle)
Shift_Table_Size = Größe der Umwandlungstabelle
Counter = Zähler der bereits eingegebenen Tasten
"%" = Moduloperation (die Operation findet den Rest nach der Division einer Zahl durch eine andere), und das Entschlüsselungsmodul (06b) eine manipulierte virtuelle Taste erhält, die es in der manipulierten Virtuellen-Tasten-Tabelle nachschlägt. Wenn es die manipulierte virtuelle Taste an Position M findet, berechnet es wie folgt die Position N in der originären Virtuellen-Tasten-Tabelle:

```
N = (M + (Scode_Table_size - (Shift_Table[ Counter %
Shift_Table_Size   ]   %   Scode_Table_size)))   %
Scode_Table_size,
```

wobei (b4) die Anti-Keylogger-Software (06) nach der Berechnung der Position N in der originären Virtuellen-Tasten-Tabelle die originäre virtuelle Taste bestimmt und darüber hinaus die Tastatureingabe bestimmt, die ursprünglich bei der gegenwärtigen Rechnerbedienung durch den Benutzer eingegeben wird.

2. Verfahren nach Anspruch 1, **dadurch gekennzeichnet, dass** ein Wert im Tasteneingabezähler sowohl im Verschlüsselungs- als auch im Entschlüsselungsmodul (06a, 06b) inkrementiert wird, wobei, wenn sich der Wert des Zählers ändert, der Benutzer unterschiedliche spezifische N- und M-Werte erhält, da jeder und sogar dieselben vom Benutzer getippten Tastenanschläge von der Anti-Keylogger-Software (06) in unterschiedliche Scancodes verschlüsselt werden.

3. Verfahren nach Anspruch 1 oder 2, **dadurch gekennzeichnet, dass** bei der Installation des zusätzlichen Tastaturtreibers (06a1) eine Installationsprozedur der Anti-Keylogger-Software (06) verwendet wird, um erstens die Kette der für die Tastatur registrierten Treiber zu analysieren und zweitens den zusätzlichen Tastaturtreiber an einer geeigneten Stelle direkt über dem -Low-Level-Tastaturtreiber (02) zu installieren.

4. Verfahren nach Anspruch 3, **dadurch gekennzeichnet, dass** der zusätzliche Tastaturtreiber (06a1) zum frühestmöglichen Zeitpunkt beim Laden des Betriebssystems geladen wird, wobei sich das Verschlüsselungsmodul (06a), sobald der Hardware-Tastaturtreiber geladen wird, Adressen von Einsprungpunkten des Treibers merkt, wobei für den Fall, dass ein anderer Treiber versucht, die Kommunikation mit dem Low-Level-Tastaturtreiber (02) abzufangen, die Adressen geändert werden und dies vom Verschlüsselungsmodul erkannt wird.

5. Verfahren nach Anspruch 3 oder 4, **dadurch gekennzeichnet, dass** Änderungen in der Konfiguration der für die Tastaturhardware registrierten Treiberkette vom Verschlüsselungsmodul (06a) überwacht werden, wobei das Verschlüsselungsmodul, wenn ein neuer Treiber oder ein neues Verschlüsselungs-/Entschlüsselungsmodul hinzugefügt wird, prüft, ob sein zusätzlicher Tastaturtreiber (06a1) an erster Stelle über dem Low-Level-Tastaturtreiber (02) bleibt.

6. Verfahren nach einem der vorhergehenden Ansprüche 1 bis 5, **dadurch gekennzeichnet, dass** Tastatureingaben des Benutzers an die Softwarebibliothek (SL) des Entschlüsselungsmoduls übertragen werden, die in die Anti-Keylogger-Software (06) einkompiliert wird.

## Revendications

1. Procédé dans une mise en marche assistée par ordinateur, où un utilisateur opère à l'aide d'un clavier connecté au moins par transmission de données à un ordinateur tel que PC, ordinateur portable, appareil mobile ou autre, par lequel, lorsque l'utilisateur appuie sur une touche du clavier (01), un équipement informatique génère un événement, c'est-à-dire une dite interruption matérielle, après quoi un pilote bas-niveau (02) du clavier est activé qui transfère l'événement à un ou plusieurs pilotes de niveau supérieur (03), puis à un système d'exploitation (04) de l'ordinateur et enfin à un programme (05) opéré par l'utilisateur afin d'exécuter les objectifs opérationnels de l'utilisateur (P), et où un logiciel anti-keylogger (06) basé sur le cryptage est utilisé pour empêcher les enregistrements malveillants de touches, où, pour empêcher l'interception de l'événement reçu du clavier durant son transfert vers le programme opéré par l'utilisateur, la communication liée à l'événement entre le pilote bas-niveau du clavier et le programme opéré par l'utilisateur recevant la clé saisie est cryptée par le logiciel anti-keylogger, qui comprend au moins un module de cryptage (06a) et un module de décryptage (06b), où le logiciel anti-keylogger (06) installe un pilote de clavier supplémentaire (06a1) du module de cryptage (06a) en tant que premier (plus proche) pilote du pilote bas-niveau de clavier (02), où les entrées de clavier de l'utilisateur sont transmises à la bibliothèque logicielle (SL) du module de décryptage, où le module de décryptage est une bibliothèque logicielle compilée dans le programme chargé d'avoir protégé l'entrée de clavier, remplaçant ainsi les appels des fonctions standards du système d'exploitation qui reçoit l'entrée de clavier avec les fonctions fournies par le module de décryptage du clavier, où, lorsque le logiciel anti-keylogger a signalé qu'il était sur le point de recevoir une entrée de clavier, les étapes suivantes (b1) sont exécutées :

   - une paire aléatoire de tableaux : un tableau original de Scancodes et un tableau mélangé de Scancodes sont générés, les tableaux ayant une taille correspondant au nombre de touches pouvant être enfoncées sur le clavier, où tous les Scancodes du tableau sont générés de sorte à proposer des Scancodes réels pour le clavier physique ;
   - un tableau aléatoire de décalage [Shift Table] est généré ;
   - un tampon pour la paire de tableau original de touches virtuelles et tableau mélangé de touches virtuelles ayant la même taille que les tableaux de Scancodes est attribué, dans lequel un moyen d'établir une correspondance entre chaque Scancode et la touche virtuelle conformément aux paramètres de la langue actuellement active est fourni par le système d'exploitation de l'ordinateur, par lequel, pour chaque élément du tableau original de Scancodes un élément est défini dans le tableau original de touches virtuelles et, pour chaque élément du tableau mélangé de Scancodes, un élément est défini dans le tableau original de touches virtuelles ;
   - tous les tableaux sont transmis par le module de décryptage (06b) au module de cryptage (06a), la procédure de transmission de l'information étant de préférence exécutée en utilisant une mémoire partagée destinée à être effacée immédiatement après l'exécution de la procédure ; et
   - essentiellement au moment où les tableaux ont été transmis, un décompte des touches enfoncées est initié par les modules de cryptage et de décryptage (06a, 06b), où (b2) lorsque l'utilisateur appuie sur une touche du clavier :
   le module de cryptage (06a) reçoit le Scancode et le recherche dans le tableau original de Scancodes puis, après avoir trouvé le Scancode dans une position N, calcule une position M dans le tableau mélangé de Scancodes comme suit :

```
M = (N + Shift_Table[Counter % Shift_Table_Size]) %
Scode_Table_size
```

où :

Scode_Table_size = taille du tableau de Scancodes (ou nombre d'éléments dans le tableau)
Shift_Table_Size = taille du tableau de décalage
Counter = compteur de touches déjà enfoncées
"%" = opération du module (l'opération trouve le reste après division d'un chiffre par un autre), et
le module de décryptage (06b) reçoit une touche virtuelle mélangée et la recherche dans le tableau mélangé de touches virtuelles puis, après avoir trouvé cette touche virtuelle mélangée en position M, calcule la position N dans le tableau original de touches virtuelles comme suit :

```
N = (M + (Scode_Table_size - (Shift_Table[ Counter %
Shift_Table_Size   ]   %   Scode_Table_size)))   %
Scode_Table_size,
```

où (b4) après avoir calculé la position N dans le tableau original de touches virtuelles, le logiciel anti-keylogger (06) détermine la touche virtuelle originale ainsi que l'entrée de clavier réalisée à l'origine dans la présente utilisation de l'ordinateur par l'utilisateur.

2. Procédé décrit dans la revendication 1, **caractérisé par le fait qu'**une valeur dans le décompte des touches enfoncées est augmentée à la fois dans les modules de cryptage et de décryptage (06a, 06b), où, lorsque la valeur du décompte change, l'utilisateur obtient des valeurs spécifiques différentes N et M attribuée à chaque touche, le logiciel anti-keylogger software (06) cryptant dans des Scancodes différents chaque touche enfoncée, même si elle est identique à une autre déjà enfoncée.

3. Procédé décrit dans la revendication 1 ou 2, **caractérisé par le fait que**, lorsque le pilote supplémentaire de clavier (06a1) est installé, une procédure d'installation du logiciel anti-keylogger (06) est utilisée en premier lieu pour analyser la chaîne de pilotes enregistrés pour le clavier et en second lieu pour installer le pilote supplémentaire de clavier à un endroit adéquat juste au-dessus pilote bas-niveau du clavier (02).

4. Procédé décrit dans la revendication 3, **caractérisé par le fait que** le pilote supplémentaire de clavier (06a1) est chargé au plus tôt lorsque système d'exploitation de l'ordinateur est lancé, dans lequel, dès que le pilote de clavier physique est chargé, le module de cryptage (06a) se souvient des adresses de points d'entrée du pilote, où, en cas de tentative d'interception par un quelconque autre pilote de la communication avec le pilote bas-niveau du clavier (02), les adresses sont changées et cela est détecté par le module de cryptage.

5. Procédé décrit dans la revendication 3 ou 4, **caractérisé par le fait que** les changements effectués dans la configuration de la chaîne de pilotes enregistrés pour le clavier physique sont surveillés par le module de cryptage (06a), dans lequel lorsqu'un quelconque nouveau pilote ou module de cryptage ou décryptage est ajouté, le module de cryptage vérifie si son pilote supplémentaire de clavier (06a1) restera prioritaire sur le pilote bas-niveau du clavier (02).

6. Procédé décrit dans une quelconque des revendications précédentes 1 à 5, **caractérisé par le fait que** les entrées de clavier par l'utilisateur sont transmises à la bibliothèque logicielle (SL) du module de décryptage, qui est compilée dans le logiciel anti-keylogger (06).

01

**Keyboard device**

Sends hardware events when keys are pressed

02

**Low-level (hardware) driver**

Transfers hardware events into hardware independent Scan Codes

06a1

**Extra keyboard driver**

Performs two tasks:

1) Encrypts Scan Codes according to the Encryption Key received from the Decryption module

2) Monitors that not any other driver inserts itself into its link with the low-level driver

06; 06a

03 → **All Other System and Third-party Keyboard Drivers**

04 → **Operating System User Mode Notification Module**

Notifies applications (computer programs) when the user presses keyboard keys

Commands from the anti-keylogger software

1) Initialize the Encryption Key

2) Start encrypting the keyboard

3) Stop encrypting the keyboard

**Computer Program 1**

When the extra keyboard driver is active, it receives not real keys, but their encrypted variant

05          P

**Computer Program 2**

When the extra keyboard driver is active, it receives not real keys, but their encrypted variant

05          P

**Anti-Keylogger Software**

Before the anti-keylogger software starts to receive a keyboard event, it does the following

1) Generates an Encryption Key for the extra keyboard driver;

2) Activates the extra driver (runs Start Encrypting Keyboard command)

When the software receives a keyboard event, it does the following.
1) Decrypts keyboard keys sent by Windows Notification Module

06; 06b, SL

b1, b2, b3, b4

**EP 3 532 980 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010185876 A